# FASCICULE DE BREVET EUROPEEN

(11) **EP 0 736 916 B1**
(45) Date de publication et mention de la délivrance du brevet: **28.10.1998**
(21) Numéro de dépôt: 96400696.9
(22) Date de dépôt: 29.03.1996
(51) Int. Cl.: H01M 2/02

(54) **Batterie monobloc étanche à électrolyte alcalin**
Verschlossene alkalische monoblock Batterie
Sealed alkaline monobloc battery

(30) Priorité: 03.04.1995 FR 9503899
(43) Date de publication de la demande: 09.10.1996
(73) Titulaire: ALCATEL ALSTHOM COMPAGNIE GENERALE D'ELECTRICITE, 75008 Paris (FR)
(72) Inventeur: Grivel, Tristan, 33000 Bordeaux (FR); Verhoog, Roelof, 33200 Bordeaux (FR)
(74) Mandataire: Laroche, Danièle

(56) Documents cités:
- EP-A- 0 669 663
- PATENT ABSTRACTS OF JAPAN vol. 013, no. 383 (E-811), 24 Août 1989 & JP-A-01 134874 (SHOWA DENKO KK;OTHERS: 01), 26 Mai 1989,
- PATENT ABSTRACTS OF JAPAN vol. 008, no. 149 (E-255), 12 Juillet 1984 & JP-A-59 056351 (NIHON DENCHI KK), 31 Mars 1984,

## Description

La présente invention concerne une batterie monobloc étanche à électrolyte alcalin. Une batterie d'accumulateurs de type monobloc possède un conteneur unique généralement de forme prismatique comportant des alvéoles, séparées par des parois, dans lesquelles sont placés les éléments d'accumulateur. Ces batteries ont des capacités comprises entre 10 et 250Ah, et une énergie massique supérieure à 55Wh/Kg.

Les batteries d'accumulateurs alcalins actuellement commercialisées sont soit de type "ouvert" permettant des échanges gazeux avec le milieu ambiant, soit de type "étanche" à soupape sans échange avec l'extérieur en fonctionnement normal. La plupart des batteries de type "étanche" sont principalement destinées à être incorporées dans des appareils portables. Elles sont donc de petite taille et de capacité limitée. Afin de protéger l'utilisateur contre une éventuelle surpression, leur forme est de préférence cylindrique et leur conteneur est métallique. Un tel conteneur est coûteux et pesant, ce qui limite l'énergie massique de la batterie.

Les batteries d'accumulateurs de type "ouvert", qui ne risquent pas de se trouver en surpression, ont une forme prismatique et possèdent un conteneur en matériau synthétique thermoplastique plus léger, permettant d'atteindre des énergies massiques élevées. Les batteries de ce type doivent faire l'objet d'un réajustement périodique du niveau de l'électrolyte à cause des pertes par électrolyse et par évaporation dues au contact avec le milieu ambiant. Les exigences des utilisateurs de batteries de type "ouvert" se portent de plus en plus sur des batteries qui ne nécessitent pas de maintenance. En supprimant les échanges gazeux avec l'extérieur, ces batteries sont devenues de type "étanche". Il se pose alors le problème de leur étanchéité aux échanges gazeux, notamment en présence d'une surpression interne modérée.

Les premières batteries de ce type, utilisées en particulier dans les applications ferroviaires, avaient un conteneur en polypropylène (PP), mais cette solution a été abandonnée pour des applications plus exigeantes à cause de la perméabilité aux gaz de ce matériau. Le conteneur des batteries destinées plus particulièrement aux applications aviation, a été réalisé en polyamide 11 (PA 11) de formule chimique (-NH-(CH₂)₁₀-CO-)ₙ obtenu par polycondensation de l'acide amino-undécanoïque. Ce matériau est coûteux et pose un problème de ressource du fait de son origine végétale (graine de ricin), et son étanchéité reste encore insuffisante.

La condition principale de l'étanchéité de la batterie est l'imperméabilité intrinsèque aux gaz du matériau constituant le conteneur. La durée d'utilisation d'une batterie au nickel de type "étanche" dépend du maintien d'un fonctionnement équilibré. Si le matériau employé pour réaliser le conteneur n'est pas imperméable à la fois à l'oxygène et à l'hydrogène, cela revient à une perte d'eau, donc un raccourcissement de la vie de la batterie. Mais si le matériau n'est perméable qu'à l'un de ces deux gaz, le profil de fonctionnement de l'électrode négative se trouve modifié ce qui provoque une chute de la capacité et une réduction de la durée de vie. L'imperméabilité à l'hydrogène est en outre une condition essentielle du fonctionnement des batteries basés sur le couple nickel-hydrure.

Bien entendu l'étanchéité du conteneur d'une batterie dépend également de la qualité d'étanchéité des liaisons entre les différentes pièces qui le composent. Pour ces batteries, les liaisons entre les pièces du conteneur sont réalisées par thermosoudure. Les autres procédés de liaisons sont moins fiables, comme le collage, ou inadaptés à une pièce de forme complexe, comme la soudure par ultra-sons. La thermosoudure peut être réalisée par contact ou par rayonnement thermique. Lorsque le conteneur est en PA 11, la thermosoudure ne peut être réalisée industriellement que par rayonnement et la liaison obtenue possède une étanchéité moindre. Les pièces sont chauffées superficiellement et irrégulièrement car leur positionnement vis à vis de la cible est forcément imprécis à cause de la forme complexe du conteneur d'une batterie monobloc. En outre du point de vue industriel, ce procédé présente des risques pour la sécurité de l'opérateur, la température d'opération se situant autour de 500°C.

Le but de la présente invention est de de proposer une batterie monobloc d'énergie massique élevée dont l'étanchéité à la fois à l'oxygène et à l'hydrogène est notablement améliorée par rapport aux solutions connues.

La présente invention propose à cet effet une batterie monobloc étanche à électrolyte alcalin dont le conteneur unique comprend des compartiments recevant des éléments d'accumulateur et comporte au moins deux pièces en matériau thermoplastique coopérant entre elles et aptes à être thermosoudées par contact, caractérisé en ce que ledit matériau comprend un alliage d'au moins deux polymères comportant :
- une proportion égale ou supérieure à 50% en poids de l'alliage d'un premier polymère choisi parmi le polyamide 6 et le polyamide 6-6, et
- une proportion inférieure ou égale à 50% en poids de l'alliage d'un deuxième polymère choisi parmi le polyéthylène, le polypropylène et leurs copolymères,
ledit matériau ayant une perméabilité à l'hydrogène au plus égale à 400cm³/m².24h, ladite perméabilité étant mesurée à 25°C sur un film de 100µm d'épaisseur sous une pression absolue de 2 bars et une atmosphère à 75% d'humidité relative.

Le matériau du conteneur comprend un alliage de polymère. Un alliage de polymère se définit comme le mélange entre au moins deux polymères non compatibles entre eux, dans lequel est ajouté un agent compatibilisant afin de conférer au mélange l'homogénéité requise.

Le premier polymère est choisi parmi le polyamide 6 et le polyamide 6-6. On peut également utiliser un copolymère alterné ou séquencé de polyamide, éventuellement greffé.

Le polyamide 6 ou polyaminocaprolactame a pour formule chimique (-NH-(CH₂)₅-CO-)ₙ. Il est obtenu par réaction de l'acide caproïque et de la diamine d'hexaméthylène. C'est un matériau qui, utilisé seul, présente des variations dimensionnelles importantes en présence d'humidité.

Le polyamide 6-6 a pour formule chimique (-NH-(CH₂)₆-NH-CO-(CH₂)₄-CO-)ₙ. Il est obtenu par réaction de l'acide adipique et de la diamine d'hexaméthylène.

La proportion du premier polymère est au moins égale à 50 % en poids de l'alliage, et de préférence comprise entre 50 % et 80 %.

Le deuxième polymère est choisi parmi le polyéthylène (-CH₂-CH₂-), le polypropylène (-CH₂-CH(CH₃)-) et un copolymère alterné ou séquencé de polyéthylène et/ou de polypropylène, éventuellement greffé.

La proportion du deuxième polymère est au plus égale à 50 % en poids de l'alliage, et de préférence comprise entre 20 % et 50 %.

Observé au microscope électronique à transmission, ce matériau se présente comme une dispersion de la polyoléfine dans la matrice polyamide. La phase polyoléfinique est sous la forme de modules réguliers de 0,1 µm à 5 µm. Le matériau peut en outre contenir des additifs électriquement non-conducteurs destinés à améliorer ses propriétés, comme par exemple des billes ou des fibres de verre, de la silice, de l'argile.

Le matériau doit avoir une perméabilité à l'hydrogène au plus égale à 400cm³/m².24h, mesurée à 25°C sur un film de 100µm d'épaisseur sous une pression relative de 1 bar et une atmosphère à 75% d'humidité relative. A titre de comparaison les valeurs minimales obtenues dans les mêmes conditions respectivement pour le PA11 et le PP sont de 2000 et 9200cm³/m².24h pour l'hydrogène.

Pour un fonctionnement satisfaisant de l'accumulateur de l'invention il est préférable que le matériau ait une perméabilité à l'oxygène au plus égale à 150cm³/m².24h, mesurée à 25°C sur un film de 100µm d'épaisseur sous une pression relative de 1 bar et une atmosphère à 75% d'humidité relative. A titre de comparaison les valeurs minimales obtenues dans les mêmes conditions respectivement pour le PA11 et le PP sont de 500 et 2300cm³/m².24h pour l'oxygène.

De préférence, le matériau est choisi parmi les matériaux commercialisés sous la marque "ORGALLOY".

Les pièces composant le conteneur sont réalisées par injection sous pression du matériau à l'état fondu. Les pièces sont thermosoudées par contact. Cette technique consiste en un préchauffage par contact direct jusqu'au ramollissement avec un outil chauffant des deux surfaces à souder, et en leur serrage immédiat après recul de l'outil chauffant. Le transfert de chaleur entre l'outil et la pièce s'effectue par conduction donc en profondeur. Le temps entre le chauffage et l'application de la pression d'assemblage doit être le plus court possible pour éviter le refroidissement de la surface du polymère fondu. L'outil chauffant est en général à résistances électriques (miroir chauffant) et il est équipé d'un régulateur de température.

La combinaison des deux caractéristiques d'imperméabilité intrinsèque du matériau et d'aptitude à la thermosoudure par contact est l'unique moyen de parvenir à une étanchéité satisfaisante du conteneur, gage d'une longue durée d'utilisation de la batterie.

Il est préférable que la force nécessaire à la rupture de la liaison thermosoudée par contact dudit matériau sur lui-même soit au moins égale à 1,34±0,04KN, mesurée dans une direction perpendiculaire à la liaison sur une éprouvette d'épaisseur 2mm, de largeur 20mm et d'environ 200mm de longueur. Deux plaquettes carrées d'épaisseur 2mm et d'environ 100mm de côté sont prélevées dans le matériau. Elles sont thermosoudées bord à bord par contact. On découpe alors une éprouvette de largeur 20mm et d'environ 200mm de longueur qui chevauche la soudure de telle sorte que sa dimension soit de 20mm dans la direction perpendiculaire à la traction.

Dans les même conditions, on mesure pour le PP une force de 0,75KN, soit seulement 56% de la force nécessaire à la rupture de la liaison du matériau de l'invention.

Le conteneur selon la présente invention a comme avantage d'être chimiquement inerte vis à vis de l'électrolyte qui contient principalement au moins un hydroxyde alcalin comme la potasse KOH, la soude NaOH, ou la lithine LiOH, mais également d'autres additifs comme par exemple des tensio-actifs. Il a aussi l'avantage d'être un bon isolant électrique, d'avoir une bonne stabilité dimensionnelle en présence d'humidité, de résister aux chocs et aux températures pouvant aller jusqu'à 100°C. En outre ce matériau est léger (densité: 1,03g/cm³), facile à mettre en forme industriellement, en particulier par injection, et son coût est modéré.

Une telle batterie est particulièrement adaptée à l'utilisation comme source d'énergie d'un véhicule automobile. Le matériau du conteneur a l'avantage d'être chimiquement insensible aux différents fluides présents, comme par exemple le liquide du circuit de freinage.

L'invention sera mieux comprise et d'autres avantages et particularités apparaîtront à la lecture de la description qui va suivre, donnée à titre non limitatif, en référence au dessin annexé sur lequel:

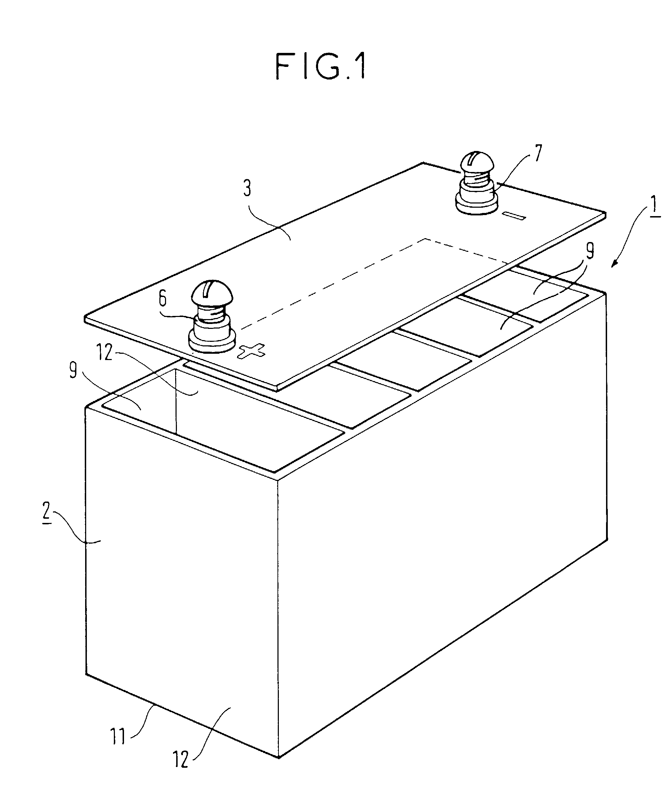

- la figure 1 représente une batterie d'accumulateurs monobloc selon la présente invention,
- la figure 2 montre la perte d'hydrogène P évaluée en unités relatives en fonction du temps T en heures, pour le matériau de l'invention en comparaison avec le PP et le PA11.

La figure représente une batterie d'accumulateurs monobloc de capacité 120Ah et de tension 6V selon la présente invention. Elle comporte un conteneur 1 composé d'un bac 2, d'un couvercle 3. Le couvercle 3 porte les bornes positive 6 et négative 7. Le bac comporte des parois longitudinales 5, un fond 11 et des parois latérales 12 d'épaisseur comprise entre 1,5 mm et 3 mm. Les éléments d'accumulateurs sont logés dans des alvéoles 9 limitées par les parois latérales 12.

Le matériau utilisé comprend un alliage à base de polyamide 6 et de polypropylène commercialisé sous la marque "ORGALLOY" et de référence "RS 6000". Les pièces 2 et 3 composant le conteneur sont réalisées par injection sous pression du matériau à l'état fondu à une température comprise entre 240°C et 290°C. Ces pièces sont ensuite assemblées par thermosoudure par contact direct. Elles sont amenées au contact de la surface de l'outil chauffant. L'outil est retiré et les zones fondues sont pressées l'une contre l'autre.

Les batteries monobloc selon l'invention sont toujours munies d'un bridage de maintien lors de leur utilisation. Dans le cas présent, la tenue mécanique du matériau n'est donc pas un paramètre critique.

Afin de vérifier l'étanchéité du conteneur ainsi réalisé, on effectue des tests d'étanchéité à l'oxygène et à l'hydrogène dans des conditions correspondant à trois modes d'utilisation de l'accumulateur.

En stockage à une température moyenne de 30°C avec une pression partielle initiale d'oxygène nulle dans le conteneur et une pression partielle d'H₂ inférieure à 0,4 bar, la perte d'hydrogène maximale est de 1,3cm³/24h, alors que l'on admet que la perte garantissant une durée de vie au moins égale à cinq ans est de 1,5cm³/24h. La perte en eau est de 0,0026cm³/24h pour une fuite admissible de 0,0041cm³/24h. Simultanément, il se produit une entrée d'oxygène représentant 0,05cm³/24h.

Un essai est réalisé à une température moyenne de 40°C. Les pressions partielles à l'intérieur du conteneur sont de 0,4 bars absolus en hydrogène et de 0,1 bar absolu en oxygène. La fuite maximale en hydrogène est de 1,5cm3/24h et la perte en eau de 0,0028cm³/24h.

Lors d'un essai dans des conditions réelles d'utilisation soit en cyclage soit en stockage, le volume total des fuites d'hydrogène moyenné sur 365 jours est compris entre 0,26cm³/jour pour un simple stockage à -10°C à un maximum de 1,2cm³/jour en cas d'utilisation.

A titre de comparaison, on a effectué un essai de perméabilité sur le matériau lui-même par rapport aux matériaux de l'art antérieur. La mesure a été réalisé à l'aide d'un hélitest de référence "ASM 181T" pendant 24 heures. On a testé un échantillon de PP (volume: 841,5cm³ et surface: 580,5cm²) ainsi qu'un échantillon de PA11 et un échantillon du matériau de l'invention (volume: 560cm³ et surface 516cm²).

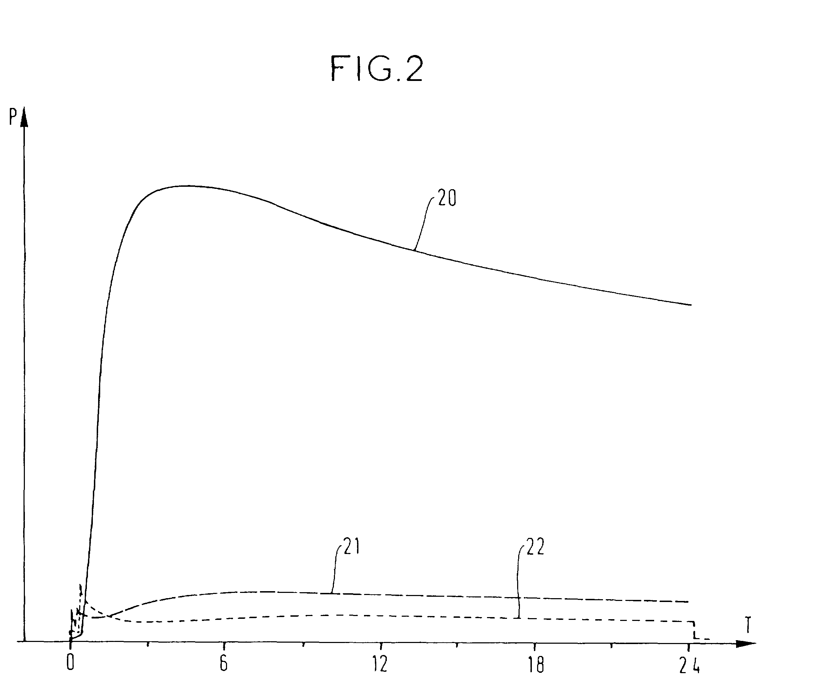

La figure 2 montre que la perméabilité à l'hydrogène est respectivement de 124.10⁻⁵mbar.l/sec. pour le PP (courbe 20) et 8,25.10⁻⁵mbar.l/sec. pour le PA11 (courbe 21). La courbe 22 de la figure 2 montre la fuite d'hydrogène pour le matériau de l'invention commercialisé sous la marque "ORGALLOY" de référence "LE 6000": la perméabilité à l'hydrogène est de 1,96.10⁻⁵mbar.l/sec. soit 62 fois moins que le PP et 4 fois moins que le PA11.

Bien entendu la présente invention n'est pas limitée aux modes de réalisation décrits et représentés, mais elle est susceptible de nombreuses variantes accessibles à l'homme de l'art. On pourra sans sortir du cadre de l'invention utiliser le matériau pour réaliser le conteneur de tout type d'accumulateur ou de batterie monobloc contenant un électrolyte alcalin, en particulier ceux dont l'électrode positive est à base de nickel comme ceux de type Ni-Cd, Ni-MH, ou Ni-Fe. L'invention s'applique à tout conteneur composé de plusieurs pièces thermosoudées par contact. A titre d'exemple le conteneur peut comprendre un bac et un couvercle indépendants, ou bien un bac servant de couvercle et un fond rapporté. On peut également adjoindre à la batterie monobloc un dispositif de refroidissement par un liquide caloporteur comme par exemple celui décrit dans la demande de brevet français FR-A-2 697 678, ou bien un système de remplissage en électrolyte centralisé qui se place sur le couvercle. Les batteries monobloc selon la présente invention peuvent être associées pour former des ensembles de plus forte capacité.

## Revendications

1. Batterie monobloc étanche à électrolyte alcalin dont le conteneur unique comprend des compartiments recevant des éléments d'accumulateur et comporte au moins deux pièces en matériau thermoplastique coopérant entre elles et aptes à être thermosoudées par contact, caractérisé en ce que ledit matériau comprend un alliage d'au moins deux polymères comportant:
- une proportion égale ou supérieure à 50% en poids de l'alliage d'un premier polymère choisi parmi le polyamide 6 et le polyamide 6-6, et
- une proportion inférieure ou égale à 50% en poids de l'alliage d'un deuxième polymère choisi parmi le polyéthylène, le polypropylène et leurs copolymères,
ledit matériau ayant une perméabilité à l'hydrogène au plus égale à 400cm³/m².24h, ladite perméabilité étant mesurée à 25°C sur un film de 100µm d'épaisseur sous une pression absolue de 2 bars (2 x 10⁵ Pa) et une atmosphère à 75% d'humidité relative.

2. Batterie selon la revendication 1, dans laquelle la proportion dudit premier polymère est comprise entre 50% et 80% en poids de l'alliage.

3. Batterie selon la revendication 1, dans laquelle la proportion dudit deuxième polymère est comprise entre 20% et 50% en poids de l'alliage.

4. Batterie selon l'une des revendications précédente, dans laquelle ledit matériau a une perméabilité à l'oxygène au plus égale à 150cm³/m².24h, ladite perméabilité étant mesurée à 25°C sur un film de 100µm d'épaisseur sous une pression absolue de 2 bars (2 x 10⁵ Pa) et une atmosphère à 75% d'humidité relative.

5. Batterie selon l'une des revendications précédente, dans laquelle ledit matériau est choisi parmi les matériaux commercialisés sous la marque "ORGALLOY" qui comprennent des alliages à base de polyamide 6 et de polypropylène.

6. Batterie selon l'une des revendications précédente, dans lequel la force de rupture perpendiculaire à la liaison thermosoudée par contact dudit matériau sur lui-même est au moins égale à 1,34±0,04KN mesurée sur une éprouvette d'épaisseur 2mm, de largeur 20mm et d'environ 200mm de longueur.

## Patentansprüche

1. Verschlossene Monoblock-Batterie mit alkalischem Elektrolyt, deren einziger Behälter Abteilungen umfaßt, die Akkumulatorelemente aufnehmen, und wenigstens zwei Teile aus thermoplastischem Material aufweist, die zusammenwirken und geeignet sind, durch Kontakt heißgeschweißt zu werden, dadurch gekennzeichnet ist, daß das Material eine Mischung von wenigstens zwei Polymeren umfaßt, die aufweist:
- einen Anteil gleich oder größer als 50 Gew.-% der Mischung eines ersten Polymers, das aus Polyamid 6 und Polyamid 6-6 ausgewählt ist, und
- einen Anteil kleiner oder gleich 50 Gew.-% der Mischung eines zweiten Polymers, das aus Polyethylen, Polypropylen und ihren Copolymeren ausgewählt ist,
wobei das Material eine Durchlässigkeit für Wasserstoff von höchstens 400 cm³/m².24 h aufweist, wobei die Durchlässigkeit bei 25°C an einem Film mit einer Dicke von 100 µm unter einem absoluten Druck von 2 bar (2 x 10⁵ Pa) und einer Atmosphäre mit einer relativen Feuchtigkeit von 75% gemessen wird.

2. Batterie nach Anspruch 1, bei der der Anteil des ersten Polymers zwischen 50 und 80 Gew.-% der Mischung liegt.

3. Batterie nach Anspruch 1, bei der der Anteil des zweiten Polymers zwischen 20 und 50 Gew.-% der Mischung liegt.

4. Batterie nach einem der vorhergehenden Ansprüche, bei der das Material eine Durchlässigkeit für Sauerstoff von höchstens 150 cm³/m².24 h aufweist, wobei die Durchlässigkeit bei 25°C an einem Film mit einer Dicke von 100 µm unter einem absoluten Druck von 2 bar (2 x 10⁵ Pa) und einer Atmosphäre mit einer relativen Feuchtigkeit von 75% gemessen wird.

5. Batterie nach einem der vorhergehenden Ansprüche, bei der das Material aus den Materialien ausgewählt ist, die unter der Marke "ORGALLOY" gehandelt werden, die Mischungen auf der Basis von Polyamid 6 und Polypropylen umfassen.

6. Batterie nach einem der vorhergehenden Ansprüche, bei der die Reißkraft senkrecht zur durch Kontakt heißgeschweißten Verbindung des Materials mit sich selbst wenigstens gleich 1,34 ± 0,04 kN beträgt, gemessen bei einer Probe mit einer Dicke von 2 mm, einer Breite von 20 mm und eine Länge von etwa 200 mm.

## Claims

1. A sealed one-piece battery having an alkaline electrolyte, comprising a single container including compartments receiving storage cells and made up of at least two mutually-cooperating parts made of thermoplastic material and suitable for being bonded together by contact heat-fusion. the battery being characterized in that said material comprises an alloy of at least two polymers comprising:
• a proportion of not less than 50% by weight of the alloy of a first polymer selected from polyamide 6 and polyamide 6-6; and
• a proportion of not more than 50% by weight of the alloy of a second polymer selected from polyethylene, polypropylene, and copolymers thereof;
said material having permeability to hydrogen no greater than 400 cm³/m².24 h, said permeability being measured at 25°C on a film that is 100 µm thick under an absolute pressure of 2 bars (2×10⁵ Pa), and in an atmosphere at 75% relative humidity.

2. A battery according to claim 1, in which the proportion of said first polymer lies in the range 50% to 80% by weight of the alloy.

3. A battery according to claim 1, in which the proportion of said second polymer lies in the range 20% to 50% by weight of the alloy.

4. A battery according to any preceding claim, in which said material has permeability to oxygen no greater than 150 cm³/m².24 h, said permeability being measured at 25°C on a film that is 100 µm thick under an absolute pressure of 2 bars (2×10⁵ Pa), and in an atmosphere at 75% relative humidity.

5. A battery according to any preceding claim, in which said material is selected from materials sold under the trademark "ORGALLOY" which comprise alloys having a polyamide 6 and polypropylene base.

6. A battery according to any preceding claim, in which the breaking force perpendicular to the bond of said material to itself as obtained by contact heat-fusion, is not less than 1.34 ± 0.4 kN measured on a test piece having a thickness of 2 mm, a width of 20 mm, and a length of about 200 mm.
